# EUROPEAN PATENT SPECIFICATION

(11) **EP 3 769 456 B1**
(45) Date of publication and mention of the grant of the patent: **20.07.2022**
(21) Application number: 19714965.1
(22) Date of filing: 19.03.2019
(51) Int. Cl.: H04L 5/00, H04L 1/08, H04L 1/18, H04W 72/00

(54) **IMPROVED PHYSICAL DOWNLINK CONTROL CHANNEL (PDCCH) RELIABILITY FOR ULTRA-RELIABILITY LOW LATENCY COMMUNICATION (URLLC)**
VERBESSERTE ZUVERLÄSSIGKEIT EINES PHYSIKALISCHEN DOWNLINK-STEUERKANALS (PDCCH) FÜR ULTRA-ZUVERLÄSSIGE KOMMUNIKATION MIT NIEDRIGER LATENZ (URLLC)
FIABILITÉ DE CANAL DE COMMANDE DE LIAISON DESCENDANTE PHYSIQUE (PDCCH) AMÉLIORÉE POUR UNE COMMUNICATION À FAIBLE LATENCE ULTRA-FIABLE (URLLC)

(30) Priority: 19.03.2018 US 201862644994 P; 18.03.2019 US 201916356095
(43) Date of publication of application: 27.01.2021
(73) Proprietor: QUALCOMM INCORPORATED, San Diego, California 92121-1714 (US)
(72) Inventor: HOSSEINI, Seyedkianoush, San Diego, California 92121-1714 (US); CHEN, Wanshi, San Diego, California 92121 (US); GAAL, Peter, San Diego, California 92121 (US)
(74) Representative: Tomkins & Co
(86) International application number: PCT/US2019/022957
(87) International publication number: WO 2019/183085

(56) References cited:
- WO-A1-2016/123393
- US-A1- 2014 185 534
- VIVO: "High reliability PDCCH design", 3GPP DRAFT; R1-1800199_HIGH RELIABILITY PDCCH DESIGN, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Vancouver, Canada; 20180122 - 20180126 13 January 2018 (2018-01-13), XP051384689, Retrieved from the Internet: URL:http://www.3gpp.org/ftp/tsg%5Fran/WG1% 5FRL1/TSGR1%5FAH/NR%5FAH%5F1801/Docs/ [retrieved on 2018-01-13]
- ERICSSON: "URLLC design for LTE", 3GPP DRAFT; R1-1720534 URLLC DESIGN FOR LTE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Reno, Nevada, USA; 20171127 - 20171201 17 November 2017 (2017-11-17), XP051369028, Retrieved from the Internet: URL:http://www.3gpp.org/ftp/tsg%5Fran/WG1% 5FRL1/TSGR1%5F91/Docs/ [retrieved on 2017-11-17]
- LG ELECTRONICS: "Discussion on PDCCH repetition for URLLC", 3GPP DRAFT; R1-1802227 DISCUSSION ON PDCCH REPETITION FOR URLLC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Athens, Greece; 20180226 - 20180302 16 February 2018 (2018-02-16), XP051397232, Retrieved from the Internet: URL:http://www.3gpp.org/ftp/tsg%5Fran/WG1% 5FRL1/TSGR1%5F92/Docs/ [retrieved on 2018-02-16]

## Description

### BACKGROUND

### CLAIM OF PRIORITY UNDER 35 U.S.C. §119

This application claims priority to U.S. Application No. 16/356,095, filed March 18, 2019, which claims priority to and benefit of U.S. Provisional Patent Application Serial No. 62/644,994, filed March 19, 2018, both assigned to the assignee hereof .

### Field of the Disclosure

Aspects of the present disclosure relate generally to wireless communications systems, and more particularly, to increasing reliability of control information that schedules or triggers transmission of data using repetition.

### Description of Related Art

Wireless communication systems are widely deployed to provide various telecommunication services such as telephony, video, data, messaging, broadcasts, etc. These systems may employ multiple-access technologies capable of supporting communication with multiple users by sharing available system resources (e.g., bandwidth and transmit power). Examples of such multiple-access systems include 3rd Generation Partnership Project (3GPP) Long Term Evolution (LTE) systems, LTE Advanced (LTE-A) systems, code division multiple access (CDMA) systems, time division multiple access (TDMA) systems, frequency division multiple access (FDMA) systems, orthogonal frequency division multiple access (OFDMA) systems, single-carrier frequency division multiple access (SC-FDMA) systems, and time division synchronous code division multiple access (TD-SCDMA) systems.

In some examples, a wireless multiple-access communication system may include a number of base stations (BSs) that each can simultaneously support communication for multiple communication devices, otherwise known as user equipment (UEs). In LTE or LTE-A network, a set of one or more gNBs may define an e NodeB (eNB). In other examples (e.g., in a next generation, new radio (NR), or 5G network), a wireless multiple access communication system may include a number of distributed units (DUs) (e.g., edge units (EUs), edge nodes (ENs), radio heads (RHs), smart radio heads (SRHs), transmission reception points (TRPs), etc.) in communication with a number of central units (CUs) (e.g., central nodes (CNs), access node controllers (ANCs), etc.), where a set of one or more distributed units, in communication with a central unit, may define an access node (e.g., a NR BS, a NR NB, a network node, a 5G NB, a next generation NB (gNB), etc.). A gNB or DU may communicate with a set of UEs on downlink channels (e.g., for transmissions from a base station or to a UE) and uplink channels (e.g., for transmissions from a UE to a gNB or DU).

These multiple access technologies have been adopted in various telecommunication standards to provide a common protocol that enables different wireless devices to communicate on a municipal, national, regional, and even global level. NR (e.g., 5G radio access) is an example of an emerging telecommunication standard. NR is a set of enhancements to the LTE mobile standard promulgated by 3GPP. It is designed to better support mobile broadband Internet access by improving spectral efficiency, lowering costs, improving services, making use of new spectrum, and better integrating with other open standards using OFDMA with a cyclic prefix (CP) on the downlink (DL) and on the uplink (UL) as well as support beamforming, multiple-input multiple-output (MIMO) antenna technology, and carrier aggregation.

However, as the demand for mobile broadband access continues to increase, there exists a need for further improvements in NR and LTE technology. Preferably, these improvements should be applicable to other multi-access technologies and the telecommunication standards that employ these technologies.

Such improvements may help achieve Ultra-reliable low latency communication (URLLC) objectives. URLLC generally refers to communications services for applications, such as factory automation and autonomous driving, that require both low latency (e.g., sub-millisecond response time) high reliability (e.g., loss of less than 1 in 10⁵ packets).

### BRIEF SUMMARY

VIVO: "High reliability PDCCH design", 3GPP DRAFT; R1-1800199_HIGH RELIABILITY PDCCH DESIGN, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Vancouver, Canada; 20180122 - 20180126 13 January 2018 (2018-01-13), XP051384689 is a discussion document on high reliability PDCCH design as a contribution revised from R1-1719784

ERICSSON: "URLLC design for LTE", 3GPP DRAFT; R1-1720534 URLLC DESIGN FOR L TE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Reno, Nevada, USA; 20171127 - 20171201 17 November 2017 (2017-11-17), XP051369028 is a discussion paper discussion design aspects on data and control transmission in both DL and UL, and repetition techniques to increase the reliability.

US 2014/185534 A1 provides for an LTE system comprising a UE which is configured to perform blind HARQ combining of PDCCH messages, and an eNB which is configured with a HARQ transmission mechanism for such PDCCH messages. The PDCCH messages may be uplink or downlink grant messages, for example. In some embodiments, up to 8 messages may be combined via HARQ. Such HARQ combining may facilitate realizing a practical coverage gain.

LG ELECTRONICS: "Discussion on PDCCH repetition for URLLC", 3GPP DRAFT; R1-1802227 DISCUSSION ON PDCCH REPETITION FOR URLLC, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Athens, Greece; 20180226 - 20180302 16 February 2018 (2018-02-16), XP051397232, is a discussion on PDCCH repetition from URLLC

The systems, methods, and devices of the disclosure each have several aspects, no single one of which is solely responsible for its desirable attributes. Without limiting the scope of this disclosure as expressed by the claims which follow, some features will now be discussed briefly. After considering this discussion, and particularly after reading the section entitled "Detailed Description" one will understand how the features of this disclosure provide advantages that include improved communications between access points and stations in a wireless network.

Certain aspects of the present disclosure provide a method for wireless communication by a network entity. The method generally includes transmitting at least one physical downlink control channel (PDCCH) that schedules or triggers transmission of data, to or from a user equipment (UE), as different copies of a same transport block (TB) within a repetition window and taking one or more actions, when transmitting the at least one PDCCH, designed to improve reliability of reception by the UE.

Certain aspects of the present disclosure provide a method for wireless communication by a user equipment (UE). The method generally includes monitoring for at least one physical downlink control channel (PDCCH) from a network entity that schedules or triggers transmission of data, to or from the UE, as different copies of a same transport block (TB) within a repetition window, wherein the network entity takes one or more actions designed to improve reliability of reception of the PDCCH by the UE and participating in the repetition based transmission scheduled or triggered by the at least one PDCCH.

Aspects generally include methods, apparatus, systems, computer readable mediums, and processing systems, as substantially described herein with reference to and as illustrated by the accompanying drawings.

To the accomplishment of the foregoing and related ends, the one or more aspects comprise the features hereinafter fully described and particularly pointed out in the claims. The following description and the annexed drawings set forth in detail certain illustrative features of the one or more aspects. These features are indicative, however, of but a few of the various ways in which the principles of various aspects may be employed, and this description is intended to include all such aspects and their equivalents. The invention is defined in the appended claims.

### BRIEF DESCRIPTION OF THE DRAWINGS

So that the manner in which the above-recited features of the present disclosure can be understood in detail, a more particular description, briefly summarized above, may be had by reference to aspects, some of which are illustrated in the appended drawings. It is to be noted, however, that the appended drawings illustrate only certain typical aspects of this disclosure and are therefore not to be considered limiting of its scope, for the description may admit to other equally effective aspects.
FIG. 1 is a block diagram conceptually illustrating an example telecommunications system, in accordance with certain aspects of the present disclosure.
FIG. 2 is a block diagram illustrating an example logical architecture of a distributed radio access network (RAN), in accordance with certain aspects of the present disclosure.
FIG. 3 is a diagram illustrating an example physical architecture of a distributed RAN, in accordance with certain aspects of the present disclosure.
FIG. 4 is a block diagram conceptually illustrating a design of an example base station (BS) and user equipment (UE), in accordance with certain aspects of the present disclosure.
FIG. 5 is a diagram showing examples for implementing a communication protocol stack, in accordance with certain aspects of the present disclosure.
FIG. 6 illustrates an example of a frame format for a new radio (NR) system, in accordance with certain aspects of the present disclosure.
FIGs. 7A and 7B illustrate different example approaches for scheduling transmissions using repetition, in accordance with certain aspects of the present disclosure.
FIG. 8 illustrates example operations for wireless communication by a network entity (e.g., a gNB), in accordance with certain aspects of the present disclosure.
FIG. 9 illustrates example operations for wireless communication by a user-equipment (UE), in accordance with certain aspects of the present disclosure.
FIG. 10 illustrates an example of increased control channel element (CCE) allocation, in accordance with certain aspects of the present disclosure.
FIG. 11 illustrates another example approach for scheduling transmissions using repetition, in accordance with certain aspects of the present disclosure

To facilitate understanding, identical reference numerals have been used, where possible, to designate identical elements that are common to the figures. It is contemplated that elements disclosed in one aspect may be beneficially utilized on other aspects without specific recitation.

### DETAILED DESCRIPTION

As noted above, in addition to latency requirements, applications such as URLLC have relatively stringent requirements in terms of reliability. Repetition-based transmissions may help satisfy the reliability requirements by allowing a receiver to combine received bits with the same bits from previous transmissions. Unfortunately, this improved reliability is not realized if a physical downlink control channel (PDCCH) scheduling such repetition-based transmissions is not successfully.

Aspects of the present disclosure provide techniques for improving the reliability of signaling that schedules or triggers repetition-based transmissions. Such techniques may improve the likelihood a receiving device is able to successfully decode a control channel transmission that schedules or triggers uplink or downlink data transmissions sent using repetition.

Aspects of the present disclosure provide apparatus, methods, processing systems, and computer readable mediums for NR (new radio access technology or 5G technology). NR may support various wireless communication services, such as enhanced mobile broadband (eMBB) targeting wide bandwidth (e.g. 80 MHz beyond), millimeter wave (mmW) targeting high carrier frequency (e.g. 27 GHz or beyond), massive machine type communications (mMTC) targeting non-backward compatible MTC techniques, and/or mission critical targeting ultra-reliable low-latency communications (URLLC). These services may include latency and reliability requirements. These services may also have different transmission time intervals (TTI) to meet respective quality of service (QoS) requirements. In addition, these services may co-exist in the same subframe.

In certain systems, (e.g., 3GPP Release-13 long term evolution (LTE) networks), enhanced machine type communications (eMTC) are supported, targeting low cost devices, often at the cost of lower throughput. eMTC may involve half-duplex (HD) operation in which uplink transmissions and downlink transmissions can both be performed-but not simultaneously. Some eMTC devices (e.g., eMTC UEs) may look at (e.g., be configured with or monitor) no more than around 1 MHz or six resource blocks (RBs) of bandwidth at any given time. eMTC UEs may be configured to receive no more than around 1000 bits per subframe. For example, these eMTC UEs may support a max throughput of around 300 Kbits per second. This throughput may be sufficient for certain eMTC use cases, such as certain activity tracking, smart meter tracking, and/or updates, etc., which may consist of infrequent transmissions of small amounts of data; however, greater throughput for eMTC devices may be desirable for other cases, such as certain Internet-of-Things (IoT) use cases, wearables such as smart watches, etc.

The following description provides examples, and is not limiting of the scope, applicability, or examples set forth in the claims. Changes may be made in the function and arrangement of elements discussed without departing from the scope of the disclosure. Various examples may omit, substitute, or add various procedures or components as appropriate. For instance, the methods described may be performed in an order different from that described, and various steps may be added, omitted, or combined. Also, features described with respect to some examples may be combined in some other examples. For example, an apparatus may be implemented or a method may be practiced using any number of the aspects set forth herein. In addition, the scope of the disclosure is intended to cover such an apparatus or method which is practiced using other structure, functionality, or structure and functionality in addition to or other than the various aspects of the disclosure set forth herein. It should be understood that any aspect of the disclosure disclosed herein may be embodied by one or more elements of a claim. The word "exemplary" is used herein to mean "serving as an example, instance, or illustration." Any aspect described herein as "exemplary" is not necessarily to be construed as preferred or advantageous over other aspects.

The techniques described herein may be used for various wireless communication networks such as LTE, CDMA, TDMA, FDMA, OFDMA, SC-FDMA and other networks. The terms "network" and "system" are often used interchangeably. A CDMA network may implement a radio technology such as Universal Terrestrial Radio Access (UTRA), cdma2000, etc. UTRA includes Wideband CDMA (WCDMA) and other variants of CDMA. cdma2000 covers IS-2000, IS-95 and IS-856 standards. A TDMA network may implement a radio technology such as Global System for Mobile Communications (GSM). An OFDMA network may implement a radio technology such as NR (e.g. 5G RA), Evolved UTRA (E-UTRA), Ultra Mobile Broadband (UMB), IEEE 802.11 (Wi-Fi), IEEE 802.16 (WiMAX), IEEE 802.20, Flash-OFDMA, etc. UTRA and E-UTRA are part of Universal Mobile Telecommunication System (UMTS). NR is an emerging wireless communications technology under development in conjunction with the 5G Technology Forum (5GTF). 3GPP Long Term Evolution (LTE) and LTE-Advanced (LTE-A) are releases of UMTS that use E-UTRA. UTRA, E-UTRA, UMTS, LTE, LTE-A and GSM are described in documents from an organization named "3rd Generation Partnership Project" (3GPP). cdma2000 and UMB are described in documents from an organization named "3rd Generation Partnership Project 2" (3GPP2). The techniques described herein may be used for the wireless networks and radio technologies mentioned above as well as other wireless networks and radio technologies. For clarity, while aspects may be described herein using terminology commonly associated with 3G and/or 4G wireless technologies, aspects of the present disclosure can be applied in other generation-based communication systems, such as 5G and later, including NR technologies.

### EXAMPLE WIRELESS COMMUNICATIONS SYSTEM

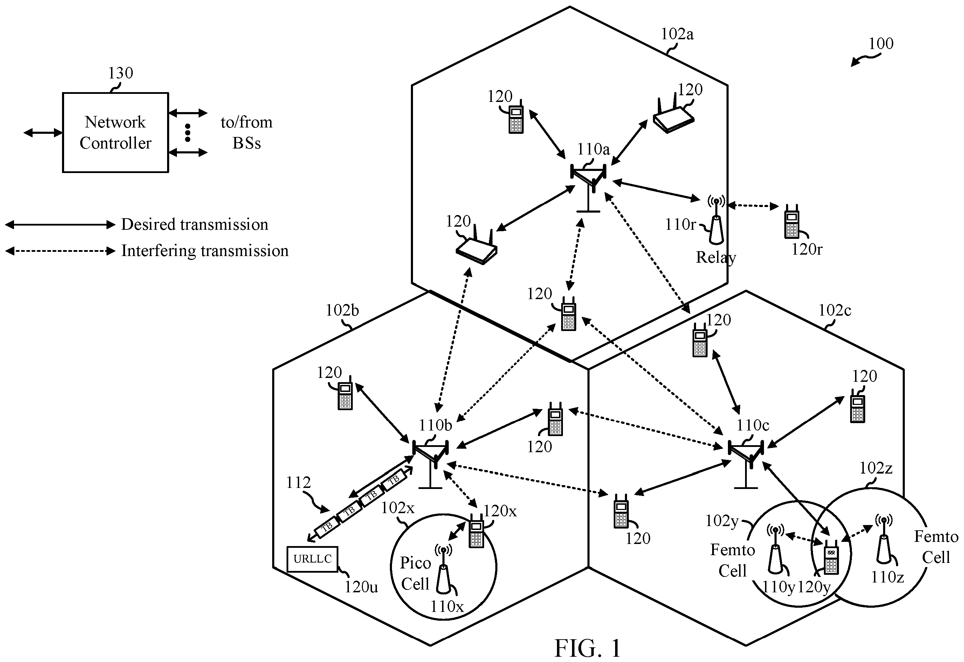

FIG. 1 illustrates an example wireless network 100 in which aspects of the present disclosure may be performed. For example, techniques presented herein may help improve the reliability of signaling (e.g., from a base station 110) that schedules or triggers repetition-based transmissions (112). Such techniques may improve the likelihood a receiving device (e.g., a URLLC capable UE 120u) is able to successfully decode a control channel transmission that schedules or triggers the repetition based transmissions 112.

The wireless network 100 may be, for example, a new radio (NR) or 5G network. A UE 120 may be configured for enhanced machine type communications (eMTC). The UE 120 may be considered a low cost device, low cost UE, eMTC device, and/or eMTC UE. The UE 120 can be configured to support higher bandwidth and/or data rates (e.g., higher than 1 MHz). The UE 120 may be configured with a plurality of narrowband regions (e.g., 24 resource blocks (RBs) or 96 RBs). The UE 120 may receive a resource allocation, from a gNB 110, allocating frequency hopped resources within a system bandwidth for the UE 120 to monitor and/or transmit on. The resource allocation can indicate non-contiguous narrowband frequency resources for uplink transmission in at least one subframe. The resource allocation may indicate frequency resources are not contained within a bandwidth capability of the UE to monitor for downlink transmission. The UE 120 may determine, based on the resource allocation, different narrowband than the resources indicated in the resource allocation from the gNB 110 for uplink transmission or for monitoring. The resource allocation indication (e.g., such as that included in the downlink control information (DCI)) may include a set of allocated subframes, frequency hopping related parameters, and an explicit resource allocation on the first subframe of the allocated subframes. The frequency hopped resource allocation on subsequent subframes are obtained by applying the frequency hopping procedure based on the frequency hopping related parameters (which may also be partly included in the DCI and configured partly through radio resource control (RRC) signaling) starting from the resources allocated on the first subframe of the allocated subframes.

As illustrated in FIG. 1, the wireless network 100 may include a number of gNBs 110 and other network entities. A gNB may be a station that communicates with UEs. Each gNB 110 may provide communication coverage for a particular geographic area. In 3GPP, the term "cell" can refer to a coverage area of a Node B and/or a NB subsystem serving this coverage area, depending on the context in which the term is used. In NR systems, the term "cell" and NB, next generation NB (gNB), 5G NB, access point (AP), BS, NR BS, or transmission reception point (TRP) may be interchangeable. In some examples, a cell may not necessarily be stationary, and the geographic area of the cell may move according to the location of a mobile gNB. In some examples, the gNBs may be interconnected to one another and/or to one or more other gNBs or network nodes (not shown) in the wireless network 100 through various types of backhaul interfaces such as a direct physical connection, a virtual network, or the like using any suitable transport network.

In general, any number of wireless networks may be deployed in a given geographic area. Each wireless network may support a particular radio access technology (RAT) and may operate on one or more frequencies. A RAT may also be referred to as a radio technology, an air interface, etc. A frequency may also be referred to as a carrier, a frequency channel, a tone, a subband, a subcarrier, etc. Each frequency may support a single RAT in a given geographic area in order to avoid interference between wireless networks of different RATs. In some cases, NR or 5G RAT networks may be deployed.

A gNB may provide communication coverage for a macro cell, a pico cell, a femto cell, and/or other types of cell. A macro cell may cover a relatively large geographic area (e.g., several kilometers in radius) and may allow unrestricted access by UEs with service subscription. A pico cell may cover a relatively small geographic area and may allow unrestricted access by UEs with service subscription. A femto cell may cover a relatively small geographic area (e.g., a home) and may allow restricted access by UEs having association with the femto cell (e.g., UEs in a Closed Subscriber Group (CSG), UEs for users in the home, etc.). A gNB for a macro cell may be referred to as a macro gNB. A gNB for a pico cell may be referred to as a pico gNB. A gNB for a femto cell may be referred to as a femto gNB or a home gNB. In the example shown in FIG. 1, the gNBs 110a, 110b and 110c may be macro gNBs for the macro cells 102a, 102b and 102c, respectively. The gNB 110x may be a pico gNB for a pico cell 102x. The gNBs 110y and 110z may be femto gNB for the femto cells 102y and 102z, respectively. A gNB may support one or multiple (e.g., three) cells.

The wireless network 100 may also include relay stations. A relay station is a station that receives a transmission of data and/or other information from an upstream station (e.g., a gNB or a UE) and sends a transmission of the data and/or other information to a downstream station (e.g., a UE or a gNB). A relay station may also be a UE that relays transmissions for other UEs. In the example shown in FIG. 1, a relay station 110r may communicate with the gNB 110a and a UE 120r in order to facilitate communication between the gNB 110a and the UE 120r. A relay station may also be referred to as a relay gNB, a relay, etc.

The wireless network 100 may be a heterogeneous network that includes gNBs of different types, e.g., macro gNB, pico gNB, femto gNB, relays, etc. These different types of gNBs may have different transmit power levels, different coverage areas, and different impact on interference in the wireless network 100. For example, a macro gNB may have a high transmit power level (e.g., 20 Watts) whereas pico gNB, femto gNB, and relays may have a lower transmit power level (e.g., 1 Watt).

The wireless network 100 may support synchronous or asynchronous operation. For synchronous operation, the gNBs may have similar frame timing, and transmissions from different gNBs may be approximately aligned in time. For asynchronous operation, the gNBs may have different frame timing, and transmissions from different gNBs may not be aligned in time. The techniques described herein may be used for both synchronous and asynchronous operation.

A network controller 130 may couple to a set of gNBs and provide coordination and control for these gNBs. The network controller 130 may communicate with the gNBs 110 via a backhaul. The gNBs 110 may also communicate with one another, for example, directly or indirectly via wireless or wireline backhaul.

The UEs 120 (e.g., 120x, 120y, etc.) may be dispersed throughout the wireless network 100, and each UE may be stationary or mobile. A UE may also be referred to as a mobile station, a terminal, an access terminal, a subscriber unit, a station, a Customer Premises Equipment (CPE), a cellular phone, a smart phone, a personal digital assistant (PDA), a wireless modem, a wireless communication device, a handheld device, a laptop computer, a cordless phone, a wireless local loop (WLL) station, a tablet, a camera, a gaming device, a netbook, a smartbook, an ultrabook, a medical device or medical equipment, a biometric sensor/device, a wearable device such as a smart watch, smart clothing, smart glasses, a smart wrist band, smart jewelry (e.g., a smart ring, a smart bracelet, etc.), an entertainment device (e.g., a music device, a video device, a satellite radio, etc.), a vehicular component or sensor, a smart meter/sensor, industrial manufacturing equipment, a global positioning system device, or any other suitable device that is configured to communicate via a wireless or wired medium. Some UEs may be considered evolved or machine-type communication (MTC) devices or evolved MTC (eMTC) devices. MTC and eMTC UEs include, for example, robots, drones, remote devices, sensors, meters, monitors, location tags, etc., that may communicate with a gNB, another device (e.g., remote device), or some other entity. A wireless node may provide, for example, connectivity for or to a network (e.g., a wide area network such as Internet or a cellular network) via a wired or wireless communication link. Some UEs may be considered Internet-of-Things (IoT) devices or narrowband IoT (NB-IoT) devices.

In FIG. 1, a solid line with double arrows indicates desired transmissions between a UE and a serving gNB, which is a gNB designated to serve the UE on the downlink and/or uplink. A finely dashed line with double arrows indicates interfering transmissions between a UE and a gNB.

Certain wireless networks (e.g., LTE) utilize orthogonal frequency division multiplexing (OFDM) on the downlink and single-carrier frequency division multiplexing (SC-FDM) on the uplink. OFDM and SC-FDM partition the system bandwidth into multiple (K) orthogonal subcarriers, which are also commonly referred to as tones, bins, etc. Each subcarrier may be modulated with data. In general, modulation symbols are sent in the frequency domain with OFDM and in the time domain with SC-FDM. The spacing between adjacent subcarriers may be fixed, and the total number of subcarriers (K) may be dependent on the system bandwidth. For example, the spacing of the subcarriers may be 15 kHz and the minimum resource allocation (e.g., an RB) may be 12 subcarriers (or 180 kHz). Consequently, the nominal FFT size may be equal to 128, 256, 512, 1024 or 2048 for system bandwidth of 1.25, 2.5, 5, 10 or 20 megahertz (MHz), respectively. The system bandwidth may also be partitioned into subbands. For example, a subband may cover 1.08 MHz (i.e., 6 resource blocks), and there may be 1, 2, 4, 8 or 16 subbands for system bandwidth of 1.25, 2.5, 5, 10 or 20 MHz, respectively.

While aspects of the examples described herein may be associated with LTE technologies, aspects of the present disclosure may be applicable with other wireless communications systems, such as NR.

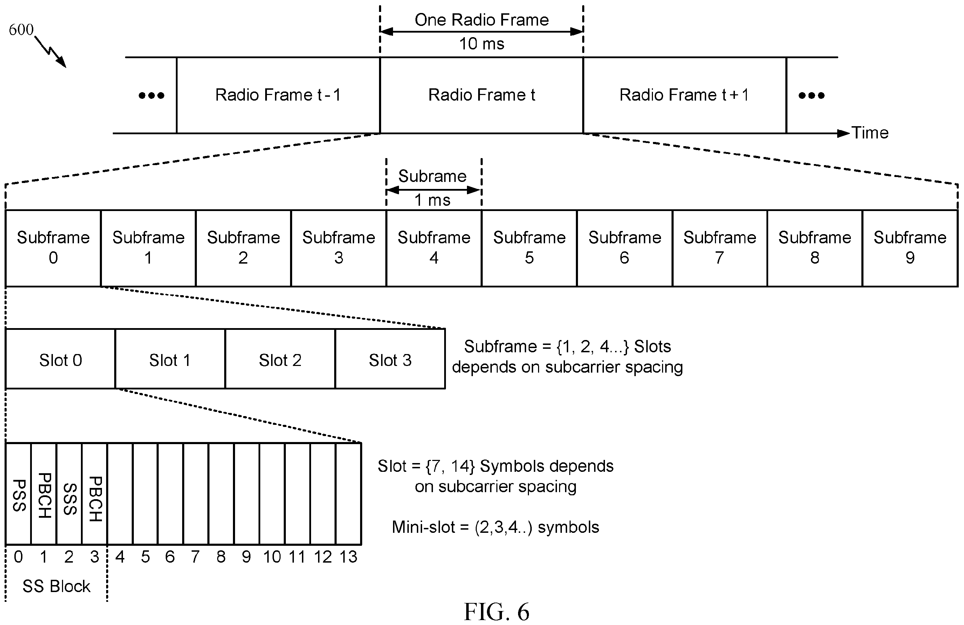

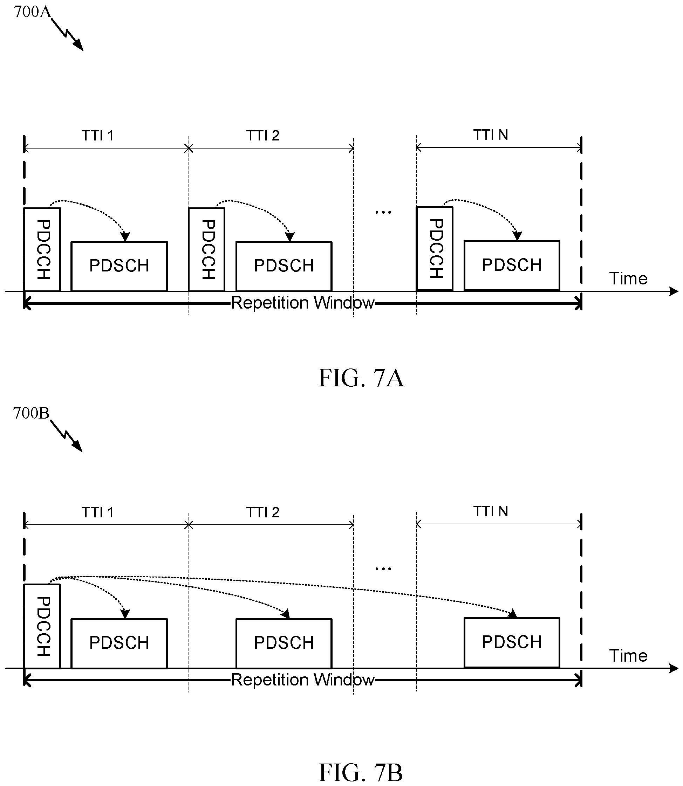

NR may utilize OFDM with a CP on the uplink and downlink and include support for half-duplex operation using TDD. A single component carrier bandwidth of 100 MHz may be supported. NR resource blocks may span 12 sub-carriers with a sub-carrier bandwidth of 75 kHz over a 0.1 ms duration. Each radio frame may consist of two half frames, each half frame consisting of 5 subframes, with a length of 10 ms. Consequently, each subframe may have a length of 1 ms. Each subframe may indicate a link direction (i.e., DL or UL) for data transmission and the link direction for each subframe may be dynamically switched. Each subframe may include DL/UL data as well as DL/UL control data. UL and DL subframes for NR may be as described in more detail below with respect to FIGs. 6 and 7. Beamforming may be supported and beam direction may be dynamically configured. MIMO transmissions with precoding may also be supported. MIMO configurations in the DL may support up to 8 transmit antennas with multi-layer DL transmissions up to 8 streams and up to 2 streams per UE. Multi-layer transmissions with up to 2 streams per UE may be supported. Aggregation of multiple cells may be supported with up to 8 serving cells.

In LTE, the basic transmission time interval (TTI) or packet duration is the 1 subframe. In NR, a subframe is still 1 ms, but the basic TTI is referred to as a slot. A subframe contains a variable number of slots (e.g., 1, 2, 4, 8, 16,... slots) depending on the tone-spacing (e.g., 15, 30, 60, 120, 240... kHz).

In some examples, access to the air interface may be scheduled, wherein a scheduling entity (e.g., a gNB) allocates resources for communication among some or all devices and equipment within its service area or cell. The scheduling entity may be responsible for scheduling, assigning, reconfiguring, and releasing resources for one or more subordinate entities. That is, for scheduled communication, subordinate entities utilize resources allocated by the scheduling entity. gNBs are not the only entities that may function as a scheduling entity. That is, in some examples, a UE may function as a scheduling entity, scheduling resources for one or more subordinate entities (e.g., one or more other UEs). In this example, the UE is functioning as a scheduling entity, and other UEs utilize resources scheduled by the UE for wireless communication. A UE may function as a scheduling entity in a peer-to-peer (P2P) network, and/or in a mesh network. In a mesh network example, UEs may optionally communicate directly with one another in addition to communicating with the scheduling entity.

Thus, in a wireless communication network with a scheduled access to time-frequency resources and having a cellular configuration, a P2P configuration, and a mesh configuration, a scheduling entity and one or more subordinate entities may communicate utilizing the scheduled resources.

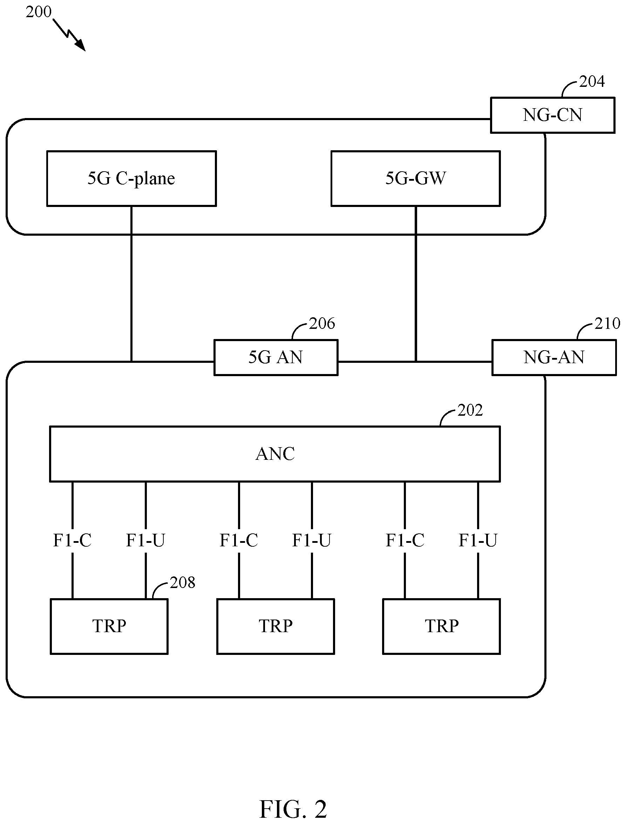

FIG. 2 illustrates an example logical architecture of a distributed radio access network (RAN) 200, which may be implemented in the wireless communication system illustrated in FIG. 1. A 5G access node 206 may include an access node controller (ANC) 202. The ANC 202 may be a central unit (CU) of the distributed RAN 200. The backhaul interface to the next generation core network (NG-CN) 204 may terminate at the ANC 202. The backhaul interface to neighboring next generation access nodes (NG-ANs) 210 may terminate at the ANC 202. The ANC 202 may include one or more TRPs 208 (which may also be referred to as BSs, NR BSs, gNBs, or some other term).

The TRPs 208 may be a DU. The TRPs may be connected to one ANC (ANC 202) or more than one ANC (not illustrated). For example, for RAN sharing, radio as a service (RaaS), and service specific AND deployments, the TRP 208 may be connected to more than one ANC. A TRP may include one or more antenna ports. The TRPs may be configured to individually (e.g., dynamic selection) or jointly (e.g., joint transmission) serve traffic to a UE.

The logical architecture of the distributed RAN 200 may support fronthauling solutions across different deployment types. For example, the logical architecture may be based on transmit network capabilities (e.g., bandwidth, latency, and/or jitter). The logical architecture may share features and/or components with LTE. The NG-AN 210 may support dual connectivity with NR. The NG-AN 210 may share a common fronthaul for LTE and NR. The logical architecture may enable cooperation between and among TRPs 208. For example, cooperation may be preset within a TRP and/or across TRPs via the ANC 202. An inter-TRP interface may be present.

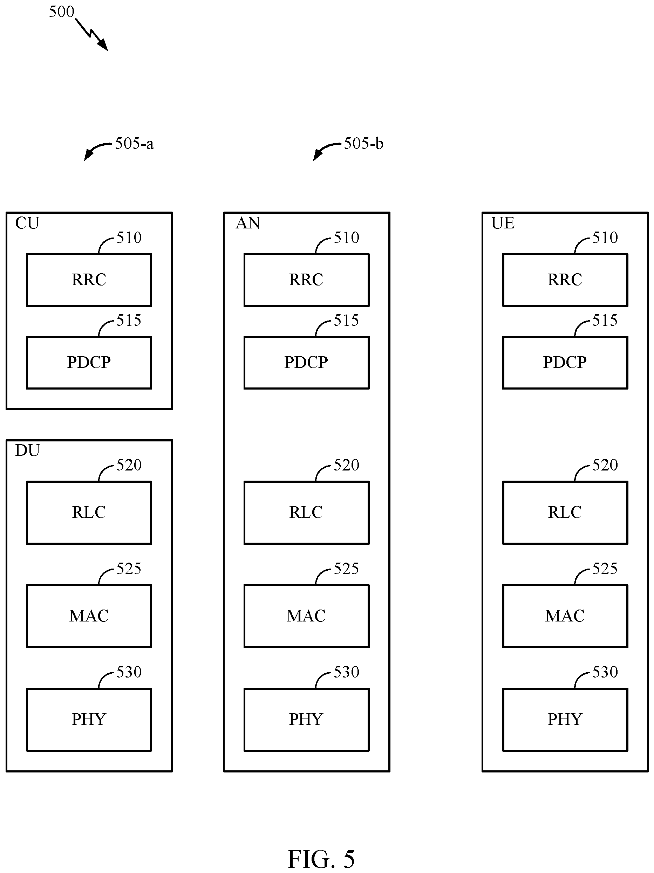

The logical architecture of the distributed RAN 200 may support a dynamic configuration of split logical functions. As will be described in more detail with reference to FIG. 5, the Radio Resource Control (RRC) layer, Packet Data Convergence Protocol (PDCP) layer, Radio Link Control (RLC) layer, Medium Access Control (MAC) layer, and a Physical (PHY) layers may be adaptably placed at the DU or CU (e.g., TRP or ANC, respectively).

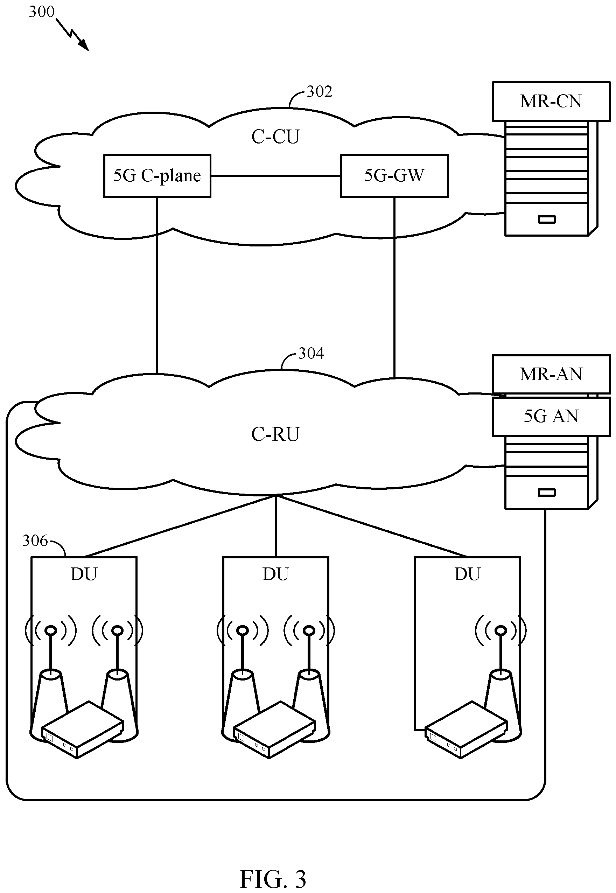

FIG. 3 illustrates an example physical architecture of a distributed RAN 300, according to aspects of the present disclosure. A centralized core network unit (C-CU) 302 may host core network functions. The C-CU 302 may be centrally deployed. C-CU functionality may be offloaded (e.g., to advanced wireless services (AWS)), in an effort to handle peak capacity.

A centralized RAN unit (C-RU) 304 may host one or more ANC functions. The C-RU 304 may host core network functions locally. The C-RU 304 may have distributed deployment. The C-RU 304 may be closer to the network edge.

A DU 306 may host one or more TRPs (e.g., an edge node (EN), an edge unit (EU), a radio head (RH), a smart radio head (SRH), or the like). The DU may be located at edges of the network with radio frequency (RF) functionality.

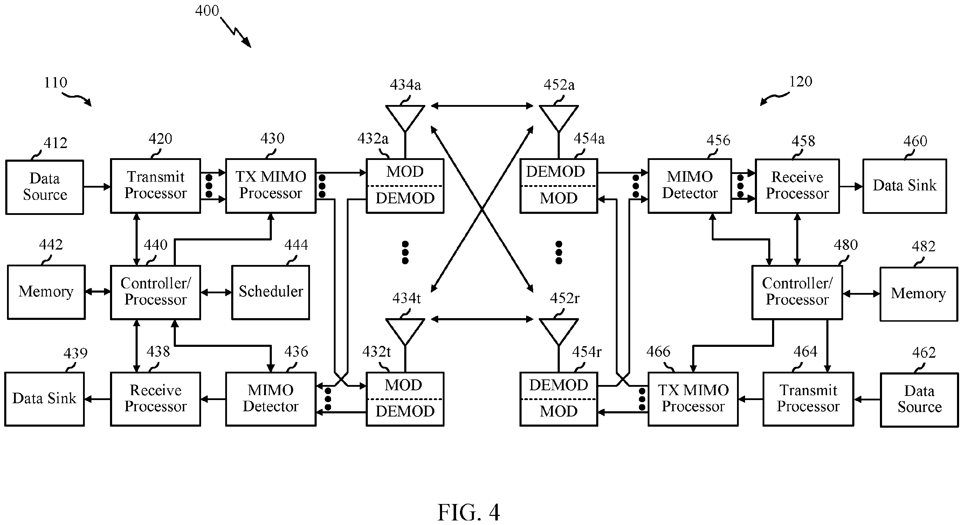

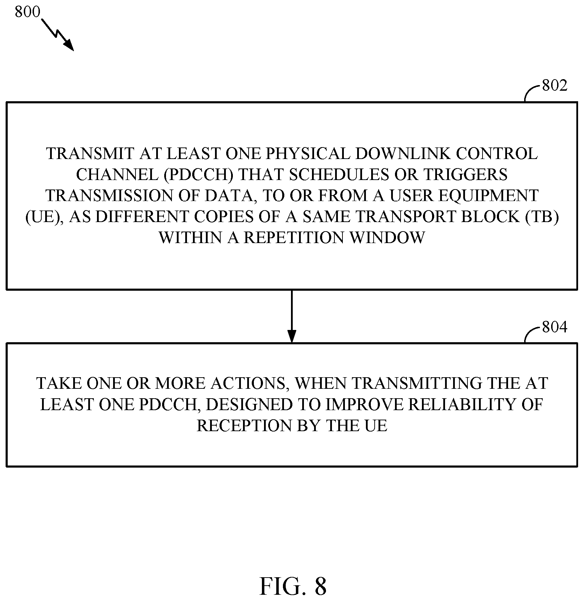

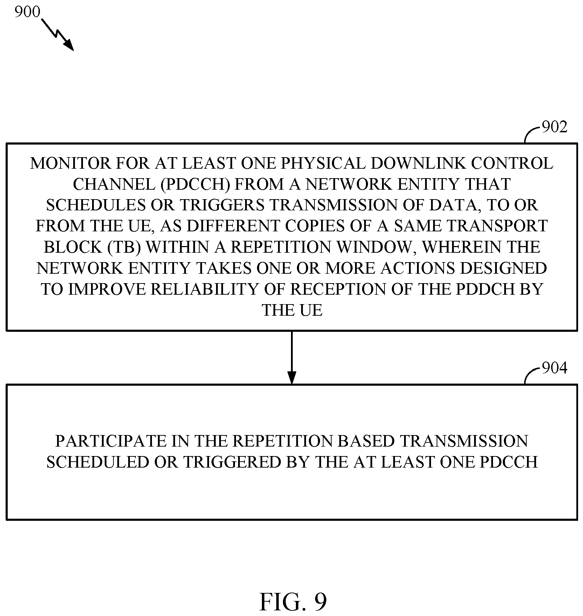

FIG. 4 illustrates example components of the gNB 110 and UE 120 illustrated in FIG. 1, which may be used to implement aspects of the present disclosure for frequency hopping for large bandwidth allocations. For example, antennas 452, Tx/Rx 222, processors 466, 458, 464, and/or controller/processor 480 of the UE 120 and/or antennas 434, processors 460, 420, 438, and/or controller/processor 440 of the gNB 110 may be used to perform the operations described herein and illustrated with reference to FIGs. 8 and 9.

FIG. 4 shows a block diagram of a design of a gNB 110 and a UE 120, which may be one of the gNBs and one of the UEs in FIG. 1. For a restricted association scenario, the gNB 110 may be the macro gNB 110c in FIG. 1, and the UE 120 may be the UE 120y. The gNB 110 may also be gNB of some other type. The gNB 110 may be equipped with antennas 434a through 434t, and the UE 120 may be equipped with antennas 452a through 452r.

At the gNB 110, a transmit processor 420 may receive data from a data source 412 and control information from a controller/processor 440. The control information may be for the Physical Broadcast Channel (PBCH), Physical Control Format Indicator Channel (PCFICH), Physical Hybrid ARQ Indicator Channel (PHICH), Physical Downlink Control Channel (PDCCH), etc. The data may be for the Physical Downlink Shared Channel (PDSCH), etc. The processor 420 may process (e.g., encode and symbol map) the data and control information to obtain data symbols and control symbols, respectively. The processor 420 may also generate reference symbols, e.g., for the PSS, SSS, and cell-specific reference signal (CRS). A transmit (TX) multiple-input multiple-output (MIMO) processor 430 may perform spatial processing (e.g., precoding) on the data symbols, the control symbols, and/or the reference symbols, if applicable, and may provide output symbol streams to the modulators (MODs) 432a through 432t. Each modulator 432 may process a respective output symbol stream (e.g., for OFDM, etc.) to obtain an output sample stream. Each modulator 432 may further process (e.g., convert to analog, amplify, filter, and upconvert) the output sample stream to obtain a downlink signal. Downlink signals from modulators 432a through 432t may be transmitted via the antennas 434a through 434t, respectively.

At the UE 120, the antennas 452a through 452r may receive the downlink signals from the gNB 110 and may provide received signals to the demodulators (DEMODs) 454a through 454r, respectively. Each demodulator 454 may condition (e.g., filter, amplify, downconvert, and digitize) a respective received signal to obtain input samples. Each demodulator 454 may further process the input samples (e.g., for OFDM, etc.) to obtain received symbols. A MIMO detector 456 may obtain received symbols from all the demodulators 454a through 454r, perform MIMO detection on the received symbols if applicable, and provide detected symbols. A receive processor 458 may process (e.g., demodulate, deinterleave, and decode) the detected symbols, provide decoded data for the UE 120 to a data sink 460, and provide decoded control information to a controller/processor 480.

On the uplink, at the UE 120, a transmit processor 464 may receive and process data (e.g., for the Physical Uplink Shared Channel (PUSCH)) from a data source 462 and control information (e.g., for the Physical Uplink Control Channel (PUCCH) from the controller/processor 480. The transmit processor 464 may also generate reference symbols for a reference signal. The symbols from the transmit processor 464 may be precoded by a TX MIMO processor 466 if applicable, further processed by the demodulators 454a through 454r (e.g., for SC-FDM, etc.), and transmitted to the gNB 110. At the gNB 110, the uplink signals from the UE 120 may be received by the antennas 434, processed by the modulators 432, detected by a MIMO detector 436 if applicable, and further processed by a receive processor 438 to obtain decoded data and control information sent by the UE 120. The receive processor 438 may provide the decoded data to a data sink 439 and the decoded control information to the controller/processor 440.

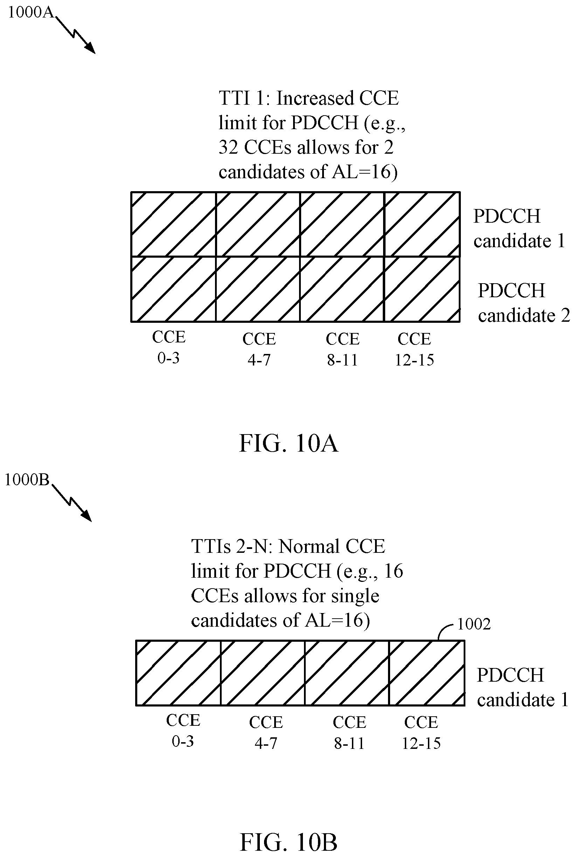

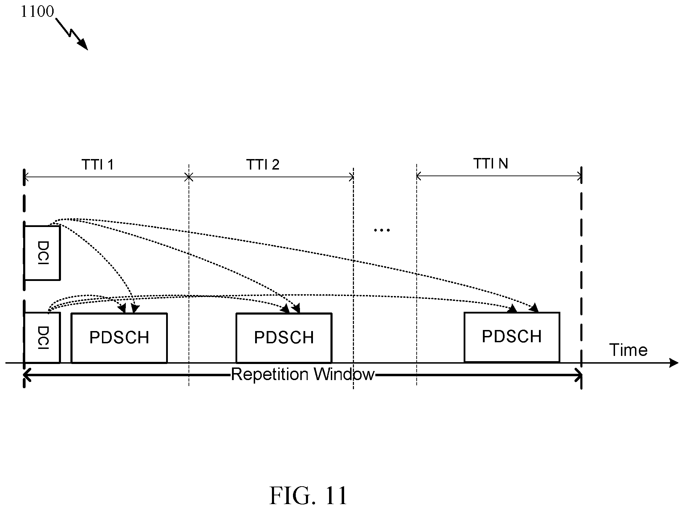

The controllers/processors 440 and 480 may direct the operation at the gNB 110 and the UE 120, respectively. The processor 440 and/or other processors and modules at the gNB 110 may perform or direct, e.g., the execution of various processes for the techniques described herein. The processor 480 and/or other processors and modules at the UE 120 may also perform or direct, e.g., the execution of the functional blocks illustrated in FIGs. 9 and 11, and/or other processes for the techniques described herein. The processor 440 and/or other processors and modules at the gNB 110 may also perform or direct, e.g., the execution of the functional blocks illustrated in FIG. 10, and/or other processes for the techniques described herein. The memories 442 and 482 may store data and program codes for the gNB 110 and the UE 120, respectively. A scheduler 444 may schedule UEs for data transmission on the downlink and/or uplink.

FIG. 5 illustrates a diagram 500 showing examples for implementing a communications protocol stack, according to aspects of the present disclosure. The illustrated communications protocol stacks may be implemented by devices operating in a in a 5G system (e.g., a system that supports uplink-based mobility). Diagram 500 illustrates a communications protocol stack including a Radio Resource Control (RRC) layer 510, a Packet Data Convergence Protocol (PDCP) layer 515, a Radio Link Control (RLC) layer 520, a Medium Access Control (MAC) layer 525, and a Physical (PHY) layer 530. In various examples the layers of a protocol stack may be implemented as separate modules of software, portions of a processor or ASIC, portions of non-collocated devices connected by a communications link, or various combinations thereof. Collocated and non-collocated implementations may be used, for example, in a protocol stack for a network access device (e.g., ANs, CUs, and/or DUs) or a UE.

A first option 505-a shows a split implementation of a protocol stack, in which implementation of the protocol stack is split between a centralized network access device (e.g., an ANC 202 in FIG. 2) and distributed network access device (e.g., DU 208 in FIG. 2). In the first option 505-a, an RRC layer 510 and a PDCP layer 515 may be implemented by the central unit, and an RLC layer 520, a MAC layer 525, and a PHY layer 530 may be implemented by the DU. In various examples the CU and the DU may be collocated or non-collocated. The first option 505-a may be useful in a macro cell, micro cell, or pico cell deployment.

A second option 505-b shows a unified implementation of a protocol stack, in which the protocol stack is implemented in a single network access device (e.g., access node (AN), new radio base station (NR BS), a new radio Node-B (NR NB), a network node (NN), or the like.). In the second option, the RRC layer 510, the PDCP layer 515, the RLC layer 520, the MAC layer 525, and the PHY layer 530 may each be implemented by the AN. The second option 505-b may be useful in a femto cell deployment.

Regardless of whether a network access device implements part or all of a protocol stack, a UE may implement an entire protocol stack (e.g., the RRC layer 510, the PDCP layer 515, the RLC layer 520, the MAC layer 525, and the PHY layer 530).

FIG. 6 is a diagram showing an example of a frame format 600 for NR. The transmission timeline for each of the downlink and uplink may be partitioned into units of radio frames. Each radio frame may have a predetermined duration (e.g., 10 ms) and may be partitioned into 10 subframes, each of 1 ms, with indices of 0 through 9. Each subframe may include a variable number of slots depending on the subcarrier spacing. Each slot may include a variable number of symbol periods (e.g., 7 or 14 symbols) depending on the subcarrier spacing. The symbol periods in each slot may be assigned indices. A mini-slot, which may be referred to as a sub-slot structure, refers to a transmit time interval having a duration less than a slot (e.g., 2, 3, or 4 symbols).

Each symbol in a slot may indicate a link direction (e.g., DL, UL, or flexible) for data transmission and the link direction for each subframe may be dynamically switched. The link directions may be based on the slot format. Each slot may include DL/UL data as well as DL/UL control information.

In NR, a synchronization signal (SS) block is transmitted. The SS block includes a PSS, a SSS, and a two symbol PBCH. The SS block can be transmitted in a fixed slot location, such as the symbols 0-3 as shown in FIG. 6. The PSS and SSS may be used by UEs for cell search and acquisition. The PSS may provide half-frame timing, the SS may provide the CP length and frame timing. The PSS and SSS may provide the cell identity. The PBCH carries some basic system information, such as downlink system bandwidth, timing information within radio frame, SS burst set periodicity, system frame number, etc. The SS blocks may be organized into SS bursts to support beam sweeping. Further system information such as, remaining minimum system information (RMSI), system information blocks (SIBs), other system information (OSI) can be transmitted on a physical downlink shared channel (PDSCH) in certain subframes.

In some circumstances, two or more subordinate entities (e.g., UEs) may communicate with each other using sidelink signals. Real-world applications of such sidelink communications may include public safety, proximity services, UE-to-network relaying, vehicle-to-vehicle (V2V) communications, Internet-of-Everything (IoE) communications, IoT communications, mission-critical mesh, and/or various other suitable applications. Generally, a sidelink signal may refer to a signal communicated from one subordinate entity (e.g., UE1) to another subordinate entity (e.g., UE2) without relaying that communication through the scheduling entity (e.g., UE or gNB), even though the scheduling entity may be utilized for scheduling and/or control purposes. In some examples, the sidelink signals may be communicated using a licensed spectrum (unlike wireless local area networks, which typically use an unlicensed spectrum).

A UE may operate in various radio resource configurations, including a configuration associated with transmitting pilots using a dedicated set of resources (e.g., a radio resource control (RRC) dedicated state, etc.) or a configuration associated with transmitting pilots using a common set of resources (e.g., an RRC common state, etc.). When operating in the RRC dedicated state, the UE may select a dedicated set of resources for transmitting a pilot signal to a network. When operating in the RRC common state, the UE may select a common set of resources for transmitting a pilot signal to the network. In either case, a pilot signal transmitted by the UE may be received by one or more network access devices, such as an AN, or a DU, or portions thereof. Each receiving network access device may be configured to receive and measure pilot signals transmitted on the common set of resources, and also receive and measure pilot signals transmitted on dedicated sets of resources allocated to the UEs for which the network access device is a member of a monitoring set of network access devices for the UE. One or more of the receiving network access devices, or a CU to which receiving network access device(s) transmit the measurements of the pilot signals, may use the measurements to identify serving cells for the UEs, or to initiate a change of serving cell for one or more of the UEs.

As noted above, URLLC generally refers to communication applications with relatively tight (e.g., stringent) requirements for successful delivery of a packet within a stringent deadline (e.g., 1 ms) with very high probability (e.g., 99.999%) of success. The reliability of a downlink (DL) transmission depends on the reliability of both the physical downlink control channel (PDCCH) and the physical downlink shared channel (PDSCH). The reliability of the PDSCH can be improved with the use of hybrid automatic repeat request (HARQ) (or automatic repeat request (ARQ)) that allows the receiver to combine different copies of the same data packet. However, the PDSCH packet (data packet) is not decodable if the corresponding PDCCH (control packet) is not detected. When the size of the data packet is comparable with that of the control packet (as in many URLLC applications), the control channel becomes the bottleneck of the overall communication.

### EXAMPLE TECHNIQUES FOR IMPROVING PDCCH RELIABILITY FOR URLLC

Certain aspects of the present disclosure provide apparatus and techniques for improving the reliability of PDCCH decoding, for example, by repetition based transmission or increases the amount or resources (e.g., CCEs) allocated for PDCCH transmission. The repetition-based transmissions may occur in both the DL (e.g., PDSCH) and UL direction (PUSCH). Repetition based approaches may include both scheduling-based (grant-based) and semi-persistent-scheduling (SPS)-like (grant-free-with or without activation signaling) approaches to enable repetitions. Grant-free transmissions may reduce latency by removing the need to transmit a PDCCH containing a grant, instead using resources pre-allocated for the repetition-based transmissions. In some cases, downlink control information (DCI) signaling may be used to activate and/or deactivate the repetition-based transmissions, notifying a UE when to monitor for repetition-based PDSCH transmissions or send repetition-based PUSCH transmissions.

In some cases of scheduling based transmissions, each copy (repetition) of the same transport block (TB) may have its own dedicated grant. For example, FIG. 7A illustrates an example timeline 700A of repetition-based DL transmissions, where each PDSCH transmission is scheduled by its own PDCCH. In other cases, a single grant may schedule multiple copies of the same TB.

For example, FIG. 7B illustrates an example timeline 700B of repetition-based DL transmissions, where the series of PDSCH transmissions are scheduled by a single PDCCH.

In the examples shown in FIGs. 7A and 7B, the PDSCH data is repeated four times, once in each of four successive transmission time intervals (TTIs 1-4). In other words, the repetition window in this case spans 4 TTIs. Of course, repetition window size (and number of repetitions) may vary and may be configured. In some instances, each TTI may be one slot (e.g., one half of a subframe). It should be noted that in other instances (e.g., NR), each slot may be one TTI. In some cases, a shortened TTI (sTTI) may be less than a slot (e.g., a mini-slot). In general, the TTI duration may be scalable. Further, while examples of repetition-based DL transmissions are shown, a similar approach may be used to schedule repetition-based UL transmissions, where the UE sends the same TB in PUSCH transmissions across multiple TTIs (although there may be some scheduling delay between a PUSCH and a PDCCH that schedules it).

For an SPS based (grant-free) approach, the UE may be pre-configured with some resources (e.g., sets of resources) or control resource sets (CORESETs). In this approach, the repetition may be activated (re-activated, or released) via a downlink control information (DCI) transmission. In such cases, the DCI may indicate which resource set to use. For an SPS-like approach without activation signaling, the UE may be configured to receive/transmit multiple copies of the same TB via a higher layer signaling.

As noted above, for both scheduling based and SPS-based repetition based transmissions, failure to decode the PDCCH that schedules or triggers the transmissions render the transmissions decodable. Therefore, aspects of the present disclosure provide techniques that may help achieve improved reliability of the PDCCH transmission.

For example, FIG. 8 illustrates example operations 800 for wireless communication by a network entity that may help improve reliability of a PDCCH transmission, in accordance with certain aspects of the present disclosure. The operations 800 may be performed, for example, by a base station 110 shown in FIG. 1 (e.g., a gNB).

Operations 800 begin, at block 802, by transmitting at least one physical downlink control channel (PDCCH) that schedules or triggers transmission of data, to or from a user equipment (UE), as different copies of a same transport block (TB) within a repetition window. For example, the PDCCH may contain a grant for repetition-based PDSCH or PUSCH transmissions or, in the case of grant-free scheduling, may include DCI to trigger repetition-based transmissions.

At 804, the network entity takes one or more actions, when transmitting the at least one PDCCH, designed to improve reliability of reception by the UE. As will be described in greater detail below, the actions may include increasing a number of CCEs available for the PDCCH transmission and/or transmitting multiple copies of the PDCCH transmission in frequency.

FIG. 9 illustrates example operations 900 for wireless communication by a UE, in accordance with certain aspects of the present disclosure. The operations 900 may be performed, for example, by a UE (e.g., a UE 120 of FIG. 1) to process PDCCH transmissions sent by a network entity performing operations 800 described above.

The operations 900 begin, at block 902, by monitoring for at least one physical downlink control channel (PDCCH) from a network entity that schedules or triggers transmission of data, to or from the UE, as different copies of a same transport block (TB) within a repetition window, wherein the network entity takes one or more actions designed to improve reliability of reception of the PDCCH by the UE. As noted above, the PDCCH may contain a grant for repetition-based PDSCH or PUSCH transmissions or, in the case of grant-free scheduling, may include DCI to trigger repetition-based transmissions. In some cases, after detecting DCI in one TTI, the UE may not monitor for DCI again until the end of the repetition window.

At 904, the UE participates in the repetition based transmission scheduled or triggered by the at least one PDCCH. For repetition-based PDSCH transmissions, in some cases, the UE may only send a HARQ Acknowledgment report after the last PDSCH in the repetition window. In other cases, the UE could send a report sooner, which could allow the transmitting network entity to stop sending the PDSCH before the end of the repetition window (e.g., early termination).

As noted above, and illustrated in FIG. 7A, each copy of a TB may have its own PDCCH. In such cases, if there is a linkage between different copies of the same TB (in terms of resource allocation), it may be sufficient for the UE to decode only one of the PDCCHs to be able to enable HARQ combining of data across transmissions. In other words, given one successful PDCCH decoding, the UE would know the location of other PDSCH transmissions. In such cases, the UE may monitor for control in every TTI within the repetition window.

When a single PDCCH schedules multiple copies of the same TB, as shown in FIG. 7B, since PDCCH is not repeated, reliability of PDCCH may be improved according to aspects of the present disclosure. As will be described in greater detail below, such improvements may also be applied to both grant-based scheduling, where the PDCCH carries a grant and grant-free scheduling where the PDCCH carries DCI that activates or releases repetition-based transmissions with an SPS-like approach.

One way to increase the reliability (e.g., of a single PDCCH transmission scheduling multiple TBs) is to increase the aggregation level (AL) used for transmitting the PDCCH. To carry a PDCCH, multiple Control Channel Elements (CCEs) are used. An aggregation level (AL) defines the number of CCEs used for PDCCH transmission to a UE. Some wireless communication standards may define ALs for transmitting a PDCCH. As an example, NR Release-15 defines AL 1, 2, 4, 8, and 16.

Aspects of the present disclosure may increase the number of CCEs available for PDCCH transmission which may allow for a higher number of decoding candidates at a larger aggregation level (than would be possible without the increase). Increasing the aggregation level, using more resources, leads to decoding gain and may help increase the likelihood of successful PDCCH decoding.

For example, with a shortened TTI (sTTI) length of two OFDM symbols (referred to as "2os"), the UE may monitor a search space (per sTTI and per CC) may be limited to 16 CCEs. Hence, in this case, only one PDCCH candidate of AL 16 can be considered. As a result, if PDCCH is transmitted with AL 16, both the DL and UL grants cannot be transmitted together.

One approach to addressing this is to increase the CCE limit in one TTI (e.g., the first TTI carrying the PDCCH scheduling multiple PDSCH or PUSCH transmissions), while keeping the standard (non-increased) CCE limit in other TTIs in the repetition window. For example, as illustrated in FIG. 10A, in TTI 1 the CCE limit may be increased to 32, accommodating 2 candidates of AL 16. For the remaining TTIs (TTI2-TTIN), the common (non-increased) CCE limit of 16 may be maintained, as illustrated in FIG. 10B. With this approach, when PDCCH is detected, the UE may not need to monitor control over (other) TTIs in the repetition window.

The various approaches presented herein to increase PDCCH reliability are enabled based on UE capability. For example, the increased CCE limit approach (for TTIs carrying PDCCH) may be used if the UE (BDs) to monitor for the increased number of decoding candidates. For example, if a DL (UL) assignment is received, then the UE only monitors the DCIs for UL (DL) assignments within the window. How many CCEs can be used in other TTIs within the repetition window may also be based on a UE capability. Similarly, the number of blind decodes/ALs the UE is to monitor may be reduced according to the UE capability.

In some cases, the CCE limit may be kept unchanged (e.g., as 16 CCEs for a 2os sTTI) for all TTIs. As noted above, in this case, if AL 16 is needed and the limit is 16 CCEs, only one (DL or UL) grant can be sent. To address this issue, however, the DL (or UL) grant may still be sent with an AL determined to be appropriate for reliable detection. The grant may include an information field to trigger UL (DL) transmissions. The grant may also have a field to indicate a direction (e.g., DL or UL transmission).

In some cases, a set of resources might be configured for a UE for repetition-based transmissions. For example, the configuration may specify a resource allocation (RA) type, repetition window size, redundancy version (RV) sequence, MCS, and the like. A DCI transmission that triggers repetition-based transmissions may indicate that these resources can be used. In some cases, multiple sets of resources might be configured for a UE (which can even be shared across the UEs). In such cases, the DCI trigger may indicate which one (of the multiple sets) can be used by the UE.

According to aspects of the present disclosure, instead of (or in addition to) PDCCH repetition in time, a PDCCH transmission can be repeated in frequency. For example, as illustrated by the timeline 1100 in FIG. 11, PDCCHs carrying different copies of the same DCI can be sent with different frequency resources over the same CC (for example, across different RB sets or CORESETs), or over different CCs. The DCI may point to the same PDSCH (or series of PDSCH transmissions) in the repetition window or the DCI may activate a grant-free repetition-based transmission. In this manner, reliability may be improved by transmitting the same PDCCH multiple times across different RB sets or CORESETs in a given TTI.

As noted above, it may not be necessary for the UE to perform combining across PDCCH transmissions. In other words, if the UE successfully detects one PDCCH transmission, a PDSCH (or series of PDSCH transmissions) can be found. In any cases, the scheme shown in FIG. 11 provides (frequency) diversity for PDCCH decoding.

Various optimizations may also be applied to enhance the improvements discussed above. For example, additional DCI enhancements, such as compact DCI/DCI repetitions/larger ALs, may only be enabled if repetition-based transmission (for PDSCH/PUSCH) is configured. This may make sense, for example, because if repetition is needed for a data channel, it is likely the UE is in poor coverage. The PDCCH enhancements described herein may be particularly useful in this case.

It may also be noted that PDSCH/PUSCH repetitions may be configured either separately (e.g., if DL and UL coverages are different) or jointly. In other words, repetition-based DL transmissions may be configured, but not repetition-based UL transmissions (or vice-versa).

Further, when PDSCH repetition is configured, HARQ-ACK feedback may be configured semi-statically or dynamically according to a variety of options. According to one option, a UE may be configured to provide no feedback (e.g., this could be the case when the delay bound is too short, and there is no time for HARQ-based retransmissions).

As noted above, in some cases, a UE may be configured to provide HARQ-ACK after each copy of a TB is received. This option may be useful, for example, for early termination or for triggering more re-transmissions with open loop (OL) adaptation. As also noted, in other cases, a single HARQ-ACK feedback may be provided only after the end of the repetition window.

In some cases, the HARQ-ACK option ultimately configured may be dependent on the TTI length. For example, the "no HARQ-ACK" option may be selected for 2os sTTI, while one of the options to provide HARQ-ACK may be provided for longer TTIs.

In some cases, the selection may (also) be dependent on the UE capability, a processing timeline, timing advance (TA) value, or the like. For example, the "no HARQ-ACK" option may be selected for UEs with a larger processing timeline, while one of the options to provide HARQ-ACK may be selected for UEs with smaller processing timelines.

The methods disclosed herein comprise one or more steps or actions for achieving the described method. The method steps and/or actions may be interchanged with one another without departing from the scope of the claims. In other words, unless a specific order of steps or actions is specified, the order and/or use of specific steps and/or actions may be modified without departing from the scope of the claims.

As used herein, a phrase referring to "at least one of' a list of items refers to any combination of those items, including single members. As an example, "at least one of: a, b, or c" is intended to cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c or any other ordering of a, b, and c).

As used herein, the term "determining" encompasses a wide variety of actions. For example, "determining" may include calculating, computing, processing, deriving, investigating, looking up (e.g., looking up in a table, a database or another data structure), ascertaining and the like. Also, "determining" may include receiving (e.g., receiving information), accessing (e.g., accessing data in a memory) and the like. Also, "determining" may include resolving, selecting, choosing, establishing and the like.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but is to be accorded the full scope consistent with the language claims, wherein reference to an element in the singular is not intended to mean "one and only one" unless specifically so stated, but rather "one or more." Unless specifically stated otherwise, the term "some" refers to one or more. All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims. No claim element is to be construed under the provisions of 35 U.S.C. §112, sixth paragraph, unless the element is expressly recited using the phrase "means for" or, in the case of a method claim, the element is recited using the phrase "step for."

The various operations of methods described above may be performed by any suitable means capable of performing the corresponding functions. The means may include various hardware and/or software component(s) and/or module(s), including, but not limited to a circuit, an application specific integrated circuit (ASIC), or processor. For example, processors 460, 420, 438, and/or controller/processor 440 of the BS 110 may be configured to perform operations 800 of FIG. 8, while processors 466, 458, 464, and/or controller/processor 480 of the UE 120 may be configured to perform operations 900 of FIG. 9.

The various illustrative logical blocks, modules and circuits described in connection with the present disclosure may be implemented or performed with a general purpose processor, a digital signal processor (DSP), an application specific integrated circuit (ASIC), a field programmable gate array (FPGA) or other programmable logic device (PLD), discrete gate or transistor logic, discrete hardware components, or any combination thereof designed to perform the functions described herein. A general-purpose processor may be a microprocessor, but in the alternative, the processor may be any commercially available processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

If implemented in hardware, an example hardware configuration may comprise a processing system in a wireless node. The processing system may be implemented with a bus architecture. The bus may include any number of interconnecting buses and bridges depending on the specific application of the processing system and the overall design constraints. The bus may link together various circuits including a processor, machine-readable media, and a bus interface. The bus interface may be used to connect a network adapter, among other things, to the processing system via the bus. The network adapter may be used to implement the signal processing functions of the PHY layer. In the case of a UE 120 (see FIG. 1), a user interface (e.g., keypad, display, mouse, joystick, etc.) may also be connected to the bus. The bus may also link various other circuits such as timing sources, peripherals, voltage regulators, power management circuits, and the like, which are well known in the art, and therefore, will not be described any further. The processor may be implemented with one or more general-purpose and/or special-purpose processors. Examples include microprocessors, microcontrollers, DSP processors, and other circuitry that can execute software. Those skilled in the art will recognize how best to implement the described functionality for the processing system depending on the particular application and the overall design constraints imposed on the overall system.

If implemented in software, the functions may be stored or transmitted over as one or more instructions or code on a computer-readable medium. Software shall be construed broadly to mean instructions, data, or any combination thereof, whether referred to as software, firmware, middleware, microcode, hardware description language, or otherwise. Computer-readable media include both computer storage media and communication media including any medium that facilitates transfer of a computer program from one place to another. The processor may be responsible for managing the bus and general processing, including the execution of software modules stored on the machine-readable storage media. A computer-readable storage medium may be coupled to a processor such that the processor can read information from, and write information to, the storage medium. In the alternative, the storage medium may be integral to the processor. By way of example, the machine-readable media may include a transmission line, a carrier wave modulated by data, and/or a computer readable storage medium with instructions stored thereon separate from the wireless node, all of which may be accessed by the processor through the bus interface. Alternatively, or in addition, the machine-readable media, or any portion thereof, may be integrated into the processor, such as the case may be with cache and/or general register files. Examples of machine-readable storage media may include, by way of example, RAM (Random Access Memory), flash memory, ROM (Read Only Memory), PROM (Programmable Read-Only Memory), EPROM (Erasable Programmable Read-Only Memory), EEPROM (Electrically Erasable Programmable Read-Only Memory), registers, magnetic disks, optical disks, hard drives, or any other suitable storage medium, or any combination thereof. The machine-readable media may be embodied in a computer-program product.

A software module may comprise a single instruction, or many instructions, and may be distributed over several different code segments, among different programs, and across multiple storage media. The computer-readable media may comprise a number of software modules. The software modules include instructions that, when executed by an apparatus such as a processor, cause the processing system to perform various functions. The software modules may include a transmission module and a receiving module. Each software module may reside in a single storage device or be distributed across multiple storage devices. By way of example, a software module may be loaded into RAM from a hard drive when a triggering event occurs. During execution of the software module, the processor may load some of the instructions into cache to increase access speed. One or more cache lines may then be loaded into a general register file for execution by the processor. When referring to the functionality of a software module below, it will be understood that such functionality is implemented by the processor when executing instructions from that software module.

Also, any connection is properly termed a computer-readable medium. For example, if the software is transmitted from a website, server, or other remote source using a coaxial cable, fiber optic cable, twisted pair, digital subscriber line (DSL), or wireless technologies such as infrared (IR), radio, and microwave, then the coaxial cable, fiber optic cable, twisted pair, DSL, or wireless technologies such as infrared, radio, and microwave are included in the definition of medium. Disk and disc, as used herein, include compact disc (CD), laser disc, optical disc, digital versatile disc (DVD), floppy disk, and Blu-ray^{®} disc where disks usually reproduce data magnetically, while discs reproduce data optically with lasers. Thus, in some aspects computer-readable media may comprise non-transitory computer-readable media (e.g., tangible media). In addition, for other aspects computer-readable media may comprise transitory computer-readable media (e.g., a signal). Combinations of the above should also be included within the scope of computer-readable media.

Thus, certain aspects may comprise a computer program product for performing the operations presented herein. For example, such a computer program product may comprise a computer-readable medium having instructions stored (and/or encoded) thereon, the instructions being executable by one or more processors to perform the operations described herein.

Further, it should be appreciated that modules and/or other appropriate means for performing the methods and techniques described herein can be downloaded and/or otherwise obtained by a user terminal and/or base station as applicable. For example, such a device can be coupled to a server to facilitate the transfer of means for performing the methods described herein. Alternatively, various methods described herein can be provided via storage means (e.g., RAM, ROM, a physical storage medium such as a compact disc (CD) or floppy disk, etc.), such that a user terminal and/or base station can obtain the various methods upon coupling or providing the storage means to the device. Moreover, any other suitable technique for providing the methods and techniques described herein to a device can be utilized.

It is to be understood that the claims are not limited to the precise configuration and components illustrated above. Various modifications, changes and variations may be made in the arrangement, operation and details of the methods and apparatus described above without departing from the scope of the claims.

## Claims

1. A method for wireless communications by a network entity, comprising:
transmitting (802) at least one physical downlink control channel, PDCCH, that schedules or triggers transmission of data, to or from a user equipment, UE, as different copies of a same transport block, TB, within a repetition window;
determining whether the UE is configured for repetition based transmission or reception of repetition-based transmission; and
taking (804) one or more actions in response to the determination when transmitting the at least one PDCCH, designed to improve reliability of reception by the UE, wherein a single PDCCH schedules multiple copies of the TB and wherein the one or more actions comprise:
utilizing an increased control channel element, CCE, limit for at least one of a first transmission time interval, TTI, of the repetition window; and
utilizing a CCE limit less than the increased CCE limit for one or more other TTIs in the repetition window wherein the increased CCE limit is determined at least in part based on a capability of the UE.

2. The method of claim 1, wherein:
the PDCCH is transmitted using an aggregation level of at least 16; and
the increased CCE limit accommodates at least two candidates at the aggregation level within a single TTI.

3. The method of claim 2, wherein the one or more actions comprise:
determining an appropriate aggregation level for transmitting the PDCCH; and
transmitting the PDCCH at the determined aggregation level.

4. The method of claim 3, wherein:
the PDCCH includes an information field to trigger the repetition based transmission of data, to or from the UE.

5. The method of claim 1, wherein the one or more actions comprise:
transmitting multiple copies of the PDCCH with repetition in frequency.

6. The method of claim 5, wherein each copy of the PDCCH indicates a same physical downlink shared channel, PDSCH, or series of PDSCHs within the repetition window.

7. The method of claim 5, wherein each copy of the PDCCH activates a grant-free repetition-based transmission.

8. The method of claim 1, further comprising when the UE is configured to receive repetition based downlink transmissions, monitoring for hybrid automatic retransmission request, HARQ, acknowledgment feedback from the UE after all copies of the downlink transmission are transmitted.

9. The method of claim 1, further comprising:
when the UE is configured to receive repetition based downlink transmissions, receiving hybrid automatic retransmission request, HARQ, acknowledgment feedback indicating a copy of the downlink transmission was successfully received by the UE before the end of the repetition window; and
in response to the HARQ acknowledgment feedback, terminating the repetition based downlink transmissions early.

10. A method for wireless communications by a user equipment, UE, comprising:
monitoring (902) for at least one physical downlink control channel, PDCCH, from a network entity that schedules or triggers transmission of data, to or from the UE, as different copies of a same transport block, TB, within a repetition window, wherein the network entity takes one or more actions designed to improve reliability of reception of the PDCCH by the UE; and
participating (904) in the repetition based transmission scheduled or triggered by the at least one PDCCH wherein the one or more actions designed to improve reliability of reception of the PDCCH by the UE are taken only if the UE is configured for repetition-based transmission or reception of repetition-based transmission, wherein a single PDCCH schedules multiple copies of the TB, wherein the one or more actions taken by the network entity comprise:
utilizing an increased control channel element, CCE, limit for at least one of a first transmission time interval, TTI, of the repetition window; and
utilizing a CCE limit less than the increased CCE limit for one or more other TTIs in the repetition window
wherein the increased CCE limit is determined at least in part based on a capability of the UE.

11. The method of claim 10, further comprising, when the UE is configured to receive repetition based downlink transmissions, providing hybrid automatic retransmission request, HARQ, acknowledgment feedback after the last copy of the downlink transmission in the repetition window.

12. The method of claim 10, wherein, when the UE is configured to receive repetition based downlink transmission, the UE is configured to provide hybrid automatic retransmission request, HARQ, acknowledgment feedback after each copy of the downlink transmission in the repetition window.

13. An apparatus for wireless communications by a network entity, comprising:
means for transmitting at least one physical downlink control channel, PDCCH, that schedules or triggers transmission of data, to or from a user equipment, UE, as different copies of a same transport block , TB, within a repetition window;
means for determining whether the UE is configured for repetition based transmission or reception of repetition-based transmission; and
means for taking one or more actions in response to the determination when transmitting the at least one PDCCH, designed to improve reliability of reception by the UE, wherein a single PDCCH schedules multiple copies of the TB and wherein the one or more actions comprise:
utilizing an increased control channel element, CCE, limit for at least one of a first transmission time interval, TTI, of the repetition window; and
utilizing a CCE limit less than the increased CCE limit for one or more other TTIs in the repetition window wherein the increased CCE limit is determined at least in part based on a capability of the UE.

14. An apparatus for wireless communications by a user equipment, UE, comprising:
means for monitoring for at least one physical downlink control channel, PDCCH, from a network entity that schedules or triggers transmission of data, to or from the UE, as different copies of a same transport block,
TB, within a repetition window, wherein the network entity takes one or more actions designed to improve reliability of reception of the PDCCH by the UE; and
means for participating in the repetition based transmission scheduled or triggered by the at least one PDCCH wherein the one or more actions designed to improve reliability of reception of the PDCCH by the UE are taken only if the UE is configured for repetition-based transmission or reception of repetition-based transmission, wherein a single PDCCH schedules multiple copies of the TB, wherein the one or more actions taken by the network entity comprise:
utilizing an increased control channel element, CCE, limit for at least one of a first transmission time interval, TTI, of the repetition window; and
utilizing a CCE limit less than the increased CCE limit for one or more other TTIs in the repetition window wherein the increased CCE limit is determined at least in part based on a capability of the UE.

## Patentansprüche

1. Ein Verfahren für Drahtloskommunikationen durch eine Netzwerkeinheit, das Folgendes aufweist:
Senden (802) wenigstens eines physischen Abwärtsstreckensteuerkanals bzw. PDCCH (PDCCH = physical downlink control channel), der eine Sendung von Daten einteilt oder auslöst, an eine Nutzereinrichtung bzw. UE (UE = user equipment) oder von dieser, als unterschiedliche Kopien eines gleichen Transportblockes bzw. TB (TB = transport block) innerhalb eines Wiederholungsfensters;
Bestimmen, ob die UE für wiederholungsbasierte Sendung oder Empfang einer wiederholungsbasierten Sendung konfiguriert ist; und
Durchführen (804) einer oder mehrerer Aktionen ansprechend auf die Bestimmung beim Senden des wenigstens einen PDCCH, die ausgelegt sind zum Verbessern einer Zuverlässigkeit eines Empfangs durch die UE, wobei ein einzelner PDCCH mehrere Kopien des TB einteilt und wobei die eine oder die mehreren Aktionen Folgendes aufweisen:
Nutzen einer erhöhten Steuerkanalelement- bzw. CCE-Grenze (CCE = control channel element) für wenigstens eines von einem ersten Sendezeitintervall bzw. TTI (TTI = transmission time interval) des Wiederholungsfensters; und
Nutzen einer CCE-Grenze, die kleiner ist als die erhöhte CCE-Grenze für ein oder mehrere andere TTIs in dem Wiederholungsfenster, wobei die erhöhte CCE-Grenze wenigstens teilweise basierend auf einer Fähigkeit der UE bestimmt wird.

2. Verfahren nach Anspruch 1, wobei:
der PDCCH unter Nutzung einer Aggregationsstufe von wenigstens 16 genutzt wird; und
die erhöhte CCE-Grenze wenigstens zwei Kandidaten auf der Aggregationsstufe innerhalb eines einzelnen TTI berücksichtigt.

3. Verfahren nach Anspruch 2, wobei die eine oder die mehreren Aktionen Folgendes aufweisen:
Bestimmen einer geeigneten Aggregationsstufe zum Senden des PDCCH; und
Senden des PDCCH auf der bestimmten Aggregationsstufe.

4. Verfahren nach Anspruch 3, wobei:
der PDCCH ein Informationsfeld zum Auslösen der wiederholungsbasierten Sendung von Daten an die UE oder von der UE beinhaltet.

5. Verfahren nach Anspruch 1, wobei die eine oder die mehreren Aktionen Folgendes aufweisen:
Senden mehrerer Kopien des PDCCH mit Wiederholung in der Frequenz.

6. Verfahren nach Anspruch 5, wobei jede Kopie des PDCCH einen gleichen gemeinsam genutzten physischen Abwärtsstreckenkanal bzw. PDSCH (PDSCH = physical downlink shared channel) oder Serien von PDSCHs innerhalb des Wiederholungsfensters anzeigt.

7. Verfahren nach Anspruch 5, wobei jede Kopie des PDCCH eine zuteilungsfreie wiederholungsbasierte Sendung aktiviert.

8. Verfahren nach Anspruch 1, das weiter, wenn die UE zum Empfangen von wiederholungsbasierten Abwärtsstreckensendungen konfiguriert ist, Überwachen hinsichtlich HARQ-Bestätigungs-Feedbacks (HARQ = hybrid automatic repeat request) von der UE aufweist, nachdem alle Kopien der Abwärtsstreckensendung gesendet worden sind.

9. Verfahren nach Anspruch 1, das weiter Folgendes aufweist:
wenn die UE zum Empfangen von wiederholungsbasierten Abwärtsstreckensendungen konfiguriert ist, Empfangen von HARQ-Bestätigungs-Feedback, das anzeigt, dass eine Kopie der Abwärtsstreckensendung erfolgreich durch die UE vor dem Ende des Wiederholungsfensters empfangen wurde; und
ansprechend auf das HARQ-Bestätigungs-Feedback, vorzeitiges Beenden der wiederholungsbasierten Abwärtsstreckensendungen.

10. Ein Verfahren für Drahtloskommunikationen durch eine Nutzereinrichtung bzw. UE (UE = user equipment), das Folgendes aufweist:
Überwachen (902) hinsichtlich wenigstens eines physischen Abwärtsstreckensteuerkanals bzw. PDCCH (PDCCH = physical downlink control channel) von einer Netzwerkeinheit, die eine Sendung von Daten einteilt oder auslöst, und zwar an die UE oder von der UE, als unterschiedliche Kopien eines gleichen Transportblockes bzw. TB (TB = transport block) innerhalb eines Wiederholungsfensters, wobei die Netzwerkeinheit eine oder mehrere Atkionen durchführt, um eine Zuverlässigkeit eines Empfangs des PDCCH durch die UE zu verbessern; und
Teilnehmen (904) an der wiederholungsbasierten Sendung, die durch den wenigstens einen PDCCH eingeteilt oder ausgelöst wird, wobei die eine oder die mehreren Aktionen, die zum Verbessern einer Zuverlässigkeit eines Empfangs des PDCCH durch die UE ausgelegt sind, nur durchgeführt werden, wenn die UE für wiederholungsbasierte Sendung oder ein Empfangen einer wiederholungsbasierten Sendung konfiguriert ist, wobei ein einzelner PDCCH mehrere Kopien des TB einteilt, wobei die eine oder die mehreren Aktionen, die durch die Netzwerkeinheit durchgeführt werden, Folgendes aufweisen:
Nutzen einer erhöhten Steuerkanalelement- bzw. CCE-Grenze (CCE = control channel element) für wenigstens eines von einem ersten Sendezeitintervall bzw. TTI (TTI = transmission time interval) des Wiederholungsfensters; und
Nutzen einer CCE-Grenze, die kleiner ist als die erhöhte CCE-Grenze für ein oder mehrere andere TTIs in dem Wiederholungsfenster, wobei die erhöhte CCE-Grenze wenigstens teilweise basierend auf einer Fähigkeit der UE bestimmt wird.

11. Verfahren nach Anspruch 10, das weiter, wenn die UE konfiguriert ist zum Empfangen von wiederholungsbasierten Abwärtsstreckensendungen, Vorsehen von HARQ-Feedback (HARQ = hybrid automatic repeat request) nach der letzten Kopie der Abwärtsstreckensendung in dem Wiederholungsfenster aufweist.

12. Verfahren nach Anspruch 10, wobei, wenn die UE zum Empfangen einer wiederholungsbasierten Abwärtsstreckensendung konfiguriert ist, die UE konfiguriert ist zum Vorsehen von HARQ-Bestätigungs-Feedback nach jeder Kopie der Abwärtsstreckensendung in dem Empfangsfenster.

13. Eine Vorrichtung für Drahtloskommunikationen durch eine Netzwerkeinheit, die Folgendes aufweist:
Mittel zum Senden wenigstens eines physischen Abwärtsstreckensteuerkanals bzw. PDCCH (PDCCH = physical downlink control channel), der eine Sendung von Daten einteilt oder auslöst, und zwar an eine Nutzereinrichtung bzw. UE (UE = user equipment) oder von dieser, als unterschiedliche Kopien eines gleichen Transportblockes bzw. TB (TB = transport block) innerhalb eines Wiederholungsfensters;
Mittel zum Bestimmen, ob die UE für wiederholungsbasierte Sendung oder Empfang einer wiederholungsbasierten Sendung konfiguriert ist; und
Mittel zum Durchführen einer oder mehrerer Aktionen ansprechend auf die Bestimmung beim Senden des wenigstens einen PDCCH, die ausgelegt sind zum Verbessern einer Zuverlässigkeit eines Empfangs durch die UE, wobei ein einzelner PDCCH mehrere Kopien des TB einteilt und wobei die eine oder die mehreren Aktionen Folgendes aufweisen:
Nutzen einer erhöhten Steuerkanalelement- bzw. CCE-Grenze (CCE = control channel element) für wenigstens eines von einem ersten Sendezeitintervall bzw. TTI (TTI = transmission time interval) des Wiederholungsfensters; und
Nutzen einer CCE-Grenze, die kleiner ist als die erhöhte CCE-Grenze für ein oder mehrere andere TTIs in dem Wiederholungsfenster, wobei die erhöhte CCE-Grenze wenigstens teilweise basierend auf einer Fähigkeit der UE bestimmt wird.

14. Eine Vorrichtung für Drahtloskommunikationen durch eine Nutzereinrichtung bzw. UE (UE = user equipment), die Folgendes aufweist:
Mittel zum Überwachen hinsichtlich wenigstens eines physischen Abwärtsstreckensteuerkanals bzw. PDCCH (PDCCH = physical downlink control channel) von einer Netzwerkeinheit, die eine Sendung von Daten einteilt oder auslöst, und zwar an die UE oder von dieser, als unterschiedliche Kopien eines gleichen Transportblockes bzw. TB innerhalb eines Wiederholungsfensters, wobei die Netzwerkeinheit eine oder mehrere Aktionen durchführt, die ausgelegt sind zum Verbessern einer Zuverlässigkeit eines Empfangs des PDCCH durch die UE; und
Mittel zum Teilnehmen an der wiederholungsbasierten Sendung, die durch den wenigstens einen PDCCH eingeteilt oder ausgelöst wird, wobei die eine oder die mehreren Aktionen, die ausgelegt sind zum Verbessern einer Zuverlässigkeit eines Empfangs des PDCCH durch die UE, nur dann durchgeführt werden, wenn die UE für wiederholungsbasierte Sendung oder einen Empfang einer wiederholungsbasierten Sendung konfiguriert ist, wobei ein einzelner PDCCH mehrere Kopien des TB einteilt, wobei die eine oder die mehreren Aktionen, die durch die Netzwerkeinheit durchgeführt werden, Folgendes aufweisen:
Nutzen einer erhöhten Steuerkanalelement- bzw. CCE-Grenze (CCE = control channel element) für wenigstens eines von einem ersten Sendezeitintervall bzw. TTI (TTI = transmission time interval) des Wiederholungsfensters; und
Nutzen einer CCE-Grenze, die kleiner ist als die erhöhte CCE-Grenze für ein oder mehrere andere TTIs in dem Wiederholungsfenster, wobei die erhöhte CCE-Grenze wenigstens teilweise basierend auf einer Fähigkeit der UE bestimmt wird.

## Revendications

1. Procédé de communications sans fil par une entité réseau, comprenant les étapes consistant à :
transmettre (802) au moins un canal de commande en liaison descendante physique, PDCCH, qui planifie ou déclenche la transmission de données, vers ou depuis un équipement utilisateur, UE, en tant que différentes copies d'un même bloc de transport, TB, dans une fenêtre de répétition ;
déterminer si l'UE est configuré pour une transmission basée sur la répétition ou pour la réception d'une transmission basée sur la répétition ; et
prendre (804) une ou plusieurs actions en réponse à la détermination lors de la transmission du au moins un PDCCH, conçues pour améliorer la fiabilité de la réception par l'UE, dans lequel un seul PDCCH planifie de multiples copies du TB et dans lequel la ou les actions comprennent :
le fait d'utiliser une limite d'élément de canal de commande, CCE, augmentée, pour au moins l'un d'un premier intervalle de temps de transmission, TTI, de la fenêtre de répétition ; et
le fait d'utiliser une limite CCE inférieure à la limite CCE augmentée pour un ou plusieurs autres TTI dans la fenêtre de répétition dans lequel la limite CCE augmentée est déterminée au moins en partie sur la base d'une capacité de l'UE.

2. Procédé selon la revendication 1, dans lequel :
le PDCCH est transmis en utilisant un niveau d'agrégation d'au moins 16 ; et
la limite augmentée de CCE permet d'accueillir au moins deux candidats au niveau de l'agrégation dans un seul TTI

3. Procédé selon la revendication 2, dans lequel la ou les actions comprennent l'étape consistant à :
déterminer un niveau d'agrégation approprié pour transmettre le PDCCH ; et
transmettre le PDCCH au niveau d'agrégation déterminé.

4. Procédé selon la revendication 3, dans lequel :
le PDCCH comprend un champ d'informations pour déclencher la transmission basée sur la répétition de données, vers ou depuis l'UE.

5. Procédé selon la revendication 1, dans lequel la ou les actions comprennent l'étape consistant à :
transmettre plusieurs copies du PDCCH avec répétition en fréquence.

6. Procédé selon la revendication 5, dans lequel chaque copie du PDCCH indique un même canal physique partagé en liaison descendante, PDSCH, ou une série de PDSCH dans la fenêtre de répétition.

7. Procédé selon la revendication 5, dans lequel chaque copie du PDCCH active une transmission basée sur la répétition sans attribution.

8. Procédé selon la revendication 1, comprenant en outre lorsque l'UE est configuré pour recevoir des transmissions en liaison descendante, sur la base de la répétition, l'étape consistant à :
surveiller pour la présence de retour d'accusé de réception de demande de retransmission automatique hybride, HARQ à partir de l'UE après que toutes les copies de la transmission en liaison descendante ont été transmises.

9. Procédé selon la revendication 1, comprenant en outre les étapes consistant à :
lorsque l'UE est configuré pour recevoir des transmissions en liaison descendante basées sur la répétition, recevoir un retour d'accusé de réception de demande de retransmission automatique hybride, HARQ indiquant qu'une copie de la transmission en liaison descendante a été reçue avec succès par l'UE avant la fin de la fenêtre de répétition ; et
en réponse au retour d'accusé de réception HARQ, terminer plus tôt les transmissions en liaison descendante basées sur la répétition.

10. Procédé de communications sans fil par un équipement utilisateur, UE, comprenant les étapes consistant à :
surveiller (902) pour la présence d'au moins un canal de commande en liaison descendante physique, PDCCH, à partir d'une entité de réseau qui planifie ou déclenche la transmission de données, vers ou depuis l'UE, en tant que différentes copies d'un même bloc de transport, TB, dans une fenêtre de répétition, dans lequel l'entité de réseau prend une ou plusieurs actions destinées à améliorer la fiabilité de la réception du PDCCH par l'UE ; et
participer (904) à la transmission basée sur la répétition planifiée ou déclenchée par le au moins un PDCCH dans lequel la ou les actions conçues pour améliorer la fiabilité de la réception du PDCCH par l'UE ne sont prises que si l'UE est configuré pour une transmission basée sur la répétition ou la réception d'une transmission basée sur la répétition, dans lequel un seul PDCCH planifie de multiples copies du TB, dans lequel la ou les actions entreprises par l'entité de réseau comprennent :
le fait d'utiliser une limite d'élément de canal de commande, CCE, augmentée, pour au moins l'un d'un premier intervalle de temps de transmission, TTI, de la fenêtre de répétition ; et
le fait d"utiliser une limite CCE inférieure à la limite CCE augmentée pour un ou plusieurs autres TTI dans la fenêtre de répétition, dans lequel la limite CCE augmentée est déterminée au moins en partie sur la base d'une capacité de l'UE.

11. Procédé selon la revendication 10, comprenant en outre, lorsque l'UE est configurée pour recevoir des transmissions en liaison descendante basées sur la répétition, l'étape consistant à fournir un retour d'accusé de réception de demande de retransmission automatique hybride, HARQ, après la dernière copie de la transmission en liaison descendante dans la fenêtre de répétition.

12. Procédé selon la revendication 10, dans lequel, lorsque l'UE est configurée pour recevoir une transmission en liaison descendante basée sur la répétition, l'UE est configurée pour fournir un retour d'accusé de réception de demande de retransmission automatique hybride, HARQ, après chaque copie de la transmission en liaison descendante dans la fenêtre de répétition.

13. Appareil pour les communications sans fil par une entité de réseau, comprenant :
des moyens pour transmettre au moins un canal de commande en liaison descendante physique, PDCCH, qui planifie ou déclenche la transmission de données, vers ou depuis un équipement utilisateur, UE, en tant que différentes copies d'un même bloc de transport, TB, dans une fenêtre de répétition ;
des moyens pour déterminer si l'UE est configuré pour une transmission basée sur la répétition ou pour la réception d'une transmission basée sur la répétition ; et
des moyens pour prendre une ou plusieurs actions en réponse à la détermination lors de la transmission du au moins un PDCCH, conçues pour améliorer la fiabilité de la réception par l'UE, dans lequel un seul PDCCH planifie de multiples copies du TB et dans lequel la ou les actions comprennent :
le fait d'utiliser une limite d'élément de canal de commande, CCE, augmentée, pour au moins l'un d'un premier intervalle de temps de transmission, TTI, de la fenêtre de répétition ; et
le fait d'utiliser une limite CCE inférieure à la limite CCE augmentée pour un ou plusieurs autres TTI dans la fenêtre de répétition dans lequel la limite CCE augmentée est déterminée au moins en partie sur la base d'une capacité de l'UE.

14. Appareil pour communications sans fil par un équipement utilisateur, UE, comprenant :
des moyens pour surveiller pour la présence d'au moins un canal de commande en liaison descendante physique, PDCCH, à partir d'une entité de réseau qui planifie ou déclenche la transmission de données, vers ou depuis l'UE, en tant que différentes copies d'un même bloc de transport, TB, dans une fenêtre de répétition, dans lequel l'entité de réseau prend une ou plusieurs actions destinées à améliorer la fiabilité de la réception du PDCCH par l'UE ; et
des moyens pour participer à la transmission basée sur la répétition planifiée ou déclenchée par le au moins un PDCCH dans lequel la ou les actions conçues pour améliorer la fiabilité de la réception du PDCCH par l'UE ne sont prises que si l'UE est configuré pour une transmission basée sur la répétition ou la réception d'une transmission basée sur la répétition, dans lequel un seul PDCCH planifie de multiples copies du TB, dans lequel la ou les actions entreprises par l'entité de réseau comprennent :
le fait d'utiliser une limite d'élément de canal de commande, CCE, augmentée, pour au moins l'un d'un premier intervalle de temps de transmission, TTI, de la fenêtre de répétition ; et
le fait d"utiliser une limite CCE inférieure à la limite CCE augmentée pour un ou plusieurs autres TTI dans la fenêtre de répétition, dans lequel la limite CCE augmentée est déterminée au moins en partie sur la base d'une capacité de l'UE.
